# EUROPEAN PATENT APPLICATION

(11) **EP 2 033 696 A1**
(43) Date of publication of application: **11.03.2009**
(21) Application number: 07116029.5
(22) Date of filing: 10.09.2007
(51) Int. Cl.: A63F 13/02, A63F 13/08, A63B 21/00

(54) **A controller for operating a computer game**

(71) Applicant: Leeds, Anthony Richard, Ruislip, Middlesex HA4 8TT (GB)
(72) Inventor: Leeds, Anthony Richard, Ruislip, Middlesex HA4 8TT (GB)
(74) Representative: Holme Patent A/S

(57) **Abstract**

A controller (1) for operating a computer game on a computer and/or a television game console (2), which comprises at least a controller housing (3) comprising a first controller part (4) and a second controller part (20) where the controller housing (3) contains the electric circuits required for electrical communication within the controller (1), the first controller part (4) comprises at least one elongated control stick (5,6) protruding from the controller housing (3) pivotally connected to the controller housing (3) in electrical and/or mechanical communication to the electrical circuits within the controller housing (3) to provide control movements in at least two dimensions when pivotally moved away from a neutral position. The second controller part (20) comprises at least one control button (21,22,23,24) providing control means via electrical and/or mechanical communication when activated or deactivated where the control means are defined by the computer game. The at least one elongated control stick (5,6) extends at least 30 cm away from the controller housing (3). The long controller parts require larger movements than short controller parts and the energy utilization of the operator (25) is significantly increased.

## Description

A controller for operating a computer game on a computer and/or a television game console, which comprises at least a controller housing, which comprises a first controller part and a second controller part, where the controller housing contains the electric circuits required for electrical communication within the controller, the first controller part comprises at least one elongated control stick protruding from the controller housing pivotally connected to the controller housing in electrical and/or mechanical communication to the electrical circuits within the controller housing to provide control movements in at least two dimensions when pivotally moved away from a neutral position, and the second controller part comprises at least one control button providing control means via electrical and/or mechanical communication when activated or deactivated where the control means are defined by the computer game.

A continuously increasing problem in modern western society is the increased prevalence of obesity, in children, adolescents and adults. Increased obesity has been reported by the World Health Organization (WHO) as one of the greatest public health challenges of the 21^{st} century, as may be seen in WHO publication no. EUR/06/5062700/8, published in relations to the WHO European Ministerial Conference on Counteracting Obesity on November 16 2006. The obesity problem of children and adolescents is for example defined as an epidemic that will follow the children into adulthood and increasing the health burden for the next generation, shortening life expectancy, contributing to a large proportion of noncommunicable diseases and negatively affecting the quality of life.

WHO recognizes that the root of the problem lies in changing social, economic and environmental determinants of people's lifestyles. Children and adolescents are increasingly moving from an active lifestyle which includes playing outside and participating in sports activities to a lifestyle where activities concerning television, computers and television game consoles are more and more important. Some of these activities may somewhat be seen as positive, as it is reported that children that learn to use computers at an early age are better prepared for the use of computers in school, university or at work as they grow up. A negative side of these activities is that resulting movement or exercise is minimal, and a large number of children and adolescents are in a worse physical condition as a result.

A large number of children or adolescents use computers or television game consoles primarily for playing computer games, where the primary physical activity is to move the fingers when using a standard controller, mouse or keyboard. Some attempts have been made to increase the physical activity by providing means for operating a computer or a game console that require increased physical activity.

One such suggestion, disclosed in US patent application No. 2004/0127334, is an exercise motivating system which rewards the exerciser with allowable TV time. The exercise system registers the exercise time used and rewards the user with TV time proportional to the exercise performed. A disadvantage with this system is that the user still does not perform any increased physical activities when watching the TV, or using a computer or a television game console. This means that enjoyment of playing a computer game is not being related to a physical activity, and the physical activity is a "necessary evil" to be allowed to achieve TV time.

Another suggestion, disclosed in US patent application No. 2007/072680, discloses a wireless control unit which uses infrared sensors and accelerometers to determine the position and movement of the control unit in three dimensions. This allows the user to use movement of the control unit to control a TV game console game, where the movements may be described as similar to the swing of a tennis racket, golf club, boxing movement, etc. A drawback of this invention is that the control unit may easily be damaged, if dropped on the floor, struck into a wall, etc. Furthermore, the price of components such as infrared sensors or accelerometers and the work necessary to develop such a control unit, results in a control unit which is expensive, in relation to the price of a generic game console controller. Furthermore, the control unit may also be used as a normal controller, where the control means are displaced or actuated using the fingers of the hands. This means that a sluggish or inert individual has the option to play a computer game without having to perform any additional physical activity.

Therefore, there is a need for a controller which provides increased physical activity for its user every time the controller is used to play a computer game on a computer or television game console.

In a first aspect according to the present invention is provided a controller of the kind mentioned in the opening paragraph, which is constructed in a simple manner.

In a second aspect according to the present invention is provided a controller of the kind mentioned in the opening paragraph, which ensures an increased consumption of calories.

The novel and unique feature whereby this is achieved according to the present invention is the fact that the at least one elongated control stick extends at least 30 cm away from the controller housing. By extending the elongated control stick away from the controller housing the free end of said control stick has to move greater distances when pivotally displaced away from the neutral position. This forces the individual using the controller to use movements of the upper and lower arm to provide movement of the control stick.

The difference of energy consumption between using a conventional controller, using the thumb of the hand in providing movement to the control stick, and using a controller having at least one elongated control stick has been studied on a number of subjects while playing a computer game. Measurements were made of the subjects when resting, when playing using a conventional controller and when playing using a controller having elongated control sticks. The following percentages are based on mean values of all the studied subjects. The difference between resting and using a conventional controller was approximately 15%, from 78 kcal/h to 90 kcal/h. The difference between resting and using a controller having elongated control sticks of a length of 64 cm was approximately 40%, from 78 kcal/h to 109,5 kcal/h, and using elongated control sticks having a length of 132 cm the difference was approximately 59%, to 124 kcal/h.

These results show that by extending the control sticks away from the control housing it is possible to increase the physical activity of the user significantly, resulting in an increased energy utilisation during a computer game. This means that individuals playing a computer game using a controller according to the present invention, would have increased physical activity and reduced risk of obesity if a significant part of their daily time is spent playing computer games on a computer or television game console.

In a preferred embodiment of the present invention, at least one elongated control stick may extend between 30 and 200 cm away from the controller housing, preferably between 50 and 180 cm, most preferred between 60 and 150 cm. As the free ends of the elongated control stick are further away from the controller housing, the free ends have to move a greater distance to provide the same control movements as a shorter control stick. Thus, the physical effort required to move the free ends is increased relative to the distance from the controller housing to the free ends.

In one embodiment of the present invention, the controller may be used where the controller is placed on the floor, and the user is standing alongside the controller holding the free ends of the control sticks in his hands. As different users may vary in size, height, or posture, the at least one elongated control stick may be adjustable in length. By adjusting the length of the control stick it is possible to adjust the controller in order to fit each specific user.

Furthermore by adjusting the length of the control sticks it is possible to use the controller in a sitting position, crouching position as well as in a standing position. An additional advantage is that by adjusting the length, it is possible to adjust the activity level of the individual using the controller, as longer control sticks require greater arm movements than a shorter control stick.

In a preferred embodiment of the present invention, the free end of the at least one elongated control stick may be provided with a handgrip. The hand grip may be designed to ergonomically fit the hand, such that when the controller is used in prolonged periods of time the hand is in an optimal position such that the use of the controller does not result in unwanted fatigue or damage to the skin, muscles, bones, tendons or other anatomical structures of the hand. An appropriate ergonomically design of the handgrip is known within the art of ergonomically design. It is obvious to the person skilled in the art that the form and shape of the handgrip may be of any kind known within the art, and is not to be limited to ergonomically designs.

When playing a computer game it may on some occasions require the use of control buttons to provide control input to the game. A traditional television controller, such as the controller disclosed in US 2001/0008851, provides control buttons on the game body housing where a control stick may be replaced by the control buttons. In a preferred embodiment of the present invention the free end of the at least one elongated control stick may be provided with at least one control button providing control means. The at least one control button may be placed on or within the hand grip such that when using the controller the hand does not have to be removed from the hand grip for activating the at least one control button.

In one embodiment of the present invention, the controller may be arranged such that at least one control button on the second controller part is of the kind which is actuated by the foot or a part of the foot, e.g. the toe through the tip of the shoe. This may result in additional increased activity of the user, as the user may be required to move the legs and feet to provide input to the controller. Furthermore, by using the foot to activate control buttons, the designer of a computer game would have the opportunity to utilize the foot activated control input in order to increase the realism of the computer game, such when designing a soccer game, a driving game and similar. This allows the user to utilize similar movements as would be used in real life in certain situations, such as kicking with the feet or providing acceleration or brake movements in soccer and driving games, respectively.

In an attempt to maximize the physical activity that is required to operate the controller of the present invention the first controller part may comprise at least two elongated control sticks pivotally connected to the first controller part. By using at least two control sticks the user has to use both hands and arms to control the computer game, which in turn increases the users energy utilisation during play.

In a preferred embodiment of the present invention the controller may be in communication with the computer and/or the television game consol via wired and/or wireless communication means. The most inexpensive solution for manufacturing the controller is most likely by having the controller in communication with the computer using a wired connection where the electrical circuits required for wired communication are relatively simple and easy to come by.

The use of wireless communication means in the controller of the present invention means that the controller needs an energy source in the form of batteries, an electricity generator or a connection to a electrical outlet, to power the electrical circuitry required to provide the wireless communication. The wireless communication may be provided using infrared, radio frequency or any kind of wireless communication known in the art. Using wireless communication the user may have increased freedom to move the controller from one position to the other, without having to consider where the computer or the video game console is positioned.

In one embodiment of the present invention the controller housing may be provided with means for securing the said controller housing to a surface, such as a surface of a table, floor, chair or wall. It is to be understood that the surface may be any kind of surface, however it is preferred that the surface provides increased stability to the controller housing, such that the at least one elongated control stick may be pivotally moved without moving the controller housing from its position on the surface. The means for securing said controller, may be positioned on the bottom or at least one side of the controller in the form of suction cups, clamps, weights or Velcro. It is to be understood that other forms for securing means are within the scope of the present invention, and would be obvious to the person skilled in the art based on the abovementioned.

The present invention also provides a method of using the controller where the method comprises the steps of placing the controller housing on a surface, extending the at least one elongated control stick into a suitable position, gripping the at least one elongated control stick with at least one hand, placing at least one foot close to the controller housing, and moving at least the hands when providing control movements to a computer game. The method may be used where the individual is in a standing or a sitting position, having the elongated control stick positioned in a suitable way. If another individual is to use the controller, the controller may be moved into another position or the controller sticks may be readjusted to an appropriate length for the another individual.

In a preferred embodiment the controller may be used as a controller for a computer game, where the controller will force the user to exercise more physical activity to operate the controller, increasing the calorie consumption during use.

To further increase and control calorie consumption during use of the controller, the controller may be implemented with means for adjusting the force required for moving the at least one elongated control stick in any direction required for playing the desired computer game. Such means may be mechanical frictional means, weight-loads, or be implemented in a software program.

For muscular training or to obtain fast increased calorie consumption it may be preferred to use wrist and/or ankle weights during use. The weights may be e.g. be secured around the limp using Velcro® strips. Adolescent boys or young men may e.g. prefer this embodiment.

The invention will be explained in greater detail below where further advantageous properties and example embodiments are described with reference to the drawings, in which
Fig. 1 shows a perspective view of a controller for operating a computer game on a computer or a television game console,
Fig. 2 shows a perspective view of a person operating the controller, where the person is in a standing position,
Fig. 3 shows a perspective view of the controller showing the adjustable elongated control sticks in their contracted position, and
Fig. 4 shows the same having the adjustable elongated control sticks in their extended position.

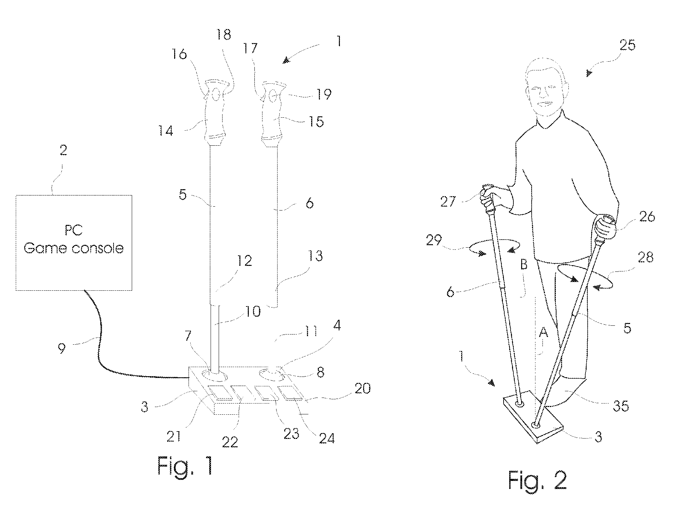

Fig. 1 shows a perspective view of a controller 1 for operating a computer game on a computer/television game console 2 according to a preferred embodiment of the present invention. The controller 1 comprises controller housing 3 having a first controller part 4 having a first 5 and a second elongated control stick 6 pivotally connected to the first controller part 4, via a first 7 and a second ball and socket joint 8. The first 5 and the second elongated control sticks 6 are in mechanical and/or electrical communication with the controller housing 3, where the pivotal position of the first 7 and the second ball and socket joint 8 is registered within the first controller part 4 and interpreted into electrical signals which are communicated via communication means 9 to the computer/video game console 2 providing control movements in at least two dimensions.

In this embodiment of the present invention the elongated control stick 5,6 are adjustable in length in a telescopic manner. The elongated control sticks 5,6 comprise their respective first part 10,11 and second part 12,13, where the first part 10,11 is arranged to slide in and out of the second part 12,13, lengthening and/or shortening the elongated control sticks. The first part 10,11 and the second part 12,13 is provided with means to secure the length of the elongated control sticks 5,6 such that the elongated control sticks 5,6 maintain their length during use.

Furthermore, each one elongated control stick 5,6 is provided with an ergonomic handgrip 14,15 allowing an individual to hold onto the elongated control sticks 5,6 and provide control movements to the controller 1 by pivotally moving the control sticks 5,6 using the ball and socket joints 7,8. The handgrip is fixed to the distal end of the second part 12,13 of the control sticks 5,6 such that when the control sticks 5,6 are lengthened and/or shortened the handgrips 14,15 follow the lengthening and/or shortening. The handgrips 14,15 have control buttons 16,17,18,19 which may be actuated using the fingers of the hand of the individual using the controller 1. In this embodiment of the present invention one set of buttons 16,17 are arranged to be actuated using the index finger of the hand, while another set of buttons 18,19 is arranged to be actuated using the thumb of the hand. Within the scope of the present invention, the handgrips 14,15 may in other embodiments be provided with additional sets of buttons while in other embodiments the handgrips 14,15 may be without any buttons. The buttons 16,17,18,19 are provided with means for providing electrical communication with the computer/television game console 2 via electrical connections and circuits within the elongated control sticks 5,6 and the controller 1.

In this preferred embodiment of the present invention, the controller 1 further comprises a second controller part 20 which is a part of the controller housing 3 and comprises four control buttons 21,22,23,24 that provide control input to the computer/television game console 2 via electrical connections in the controller housing 3. The control buttons 21,22,23,24 are arranged such that they may be actuated using the foot of the individual using the controller 1, such that the arms, hands, legs and feet of the individual are used when playing a computer game, providing an increased physical activity compared to a conventional controller as known in the art.

Fig. 2 shows a perspective view of a individual 25 operating the controller 1, where the individual 25 is in a standing position gripping the elongated control sticks 5,6 holding the hand grips 14,15 using the individual's 25 hands 26,27. In this set-up the elongated control sticks 5,6 are pivoted away from the axis A,B which indicate the neutral position of the elongated control sticks 5,6. The individual 25 can move the control sticks 5,6 in any direction angling towards or away from the axis A,B indicated by the arrows 28,29, and by releasing the control sticks 5,6 the control sticks 5,6 return to their neutral position.

A similar set-up could be achieved by shortening the elongated control sticks 5,6 where the individual using the controller 1 would be able to sit in a chair using the controller 1.

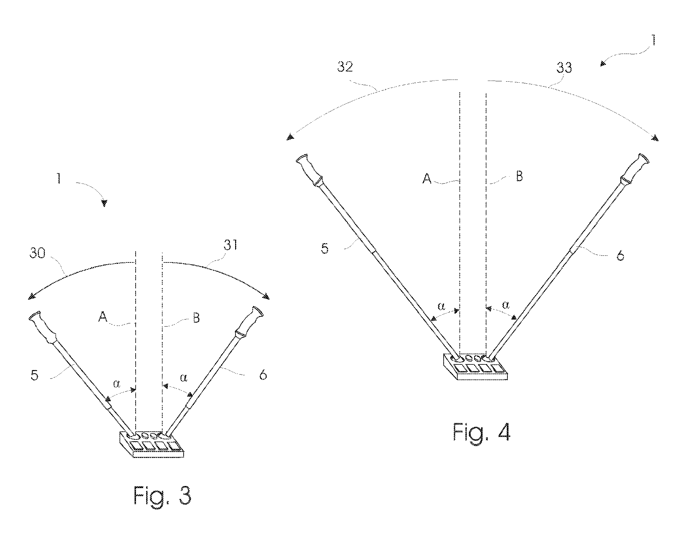

Fig. 3 shows a perspective view of the controller 1 having the elongated control sticks 5,6 in a contracted position, where the control sticks 5,6 have been pivotally moved from a neutral position, indicated with the axis A,B. The control sticks 5,6 both have been moved at an angle α from the neutral position, where the arrows 30,31 indicate the distance the free ends of the elongated control sticks 5,6 have been moved.

Fig. 4, on the other hand shows a perspective view of the controller 1 having the elongated control sticks 5,6 in a extended position, where the control sticks 5,6 have been pivotally moved at an angle α from a neutral position, indicated with the axis A,B. The angle α is of the same size as the angle α in Fig. 3, which means that the control sticks have been pivoted at an equal angle. However, the distance the free ends of the elongated control sticks 5,6 has moved is much greater, as indicated by the arrows 32,33 which means that an individual using the controller 1 as shown in Fig. 4 has to use increased physical activity to move the elongated control sticks to provide the same angular movement.

The controller 1 of the present invention may be constructed of a lightweight material, such as plastic, aluminium, composite material or any material known in the art which provides the necessary robustness and strength. The design of the electrical circuits in the controller and the electrical/mechanical communication between the elongated control sticks and the controller housing would be recognized by the person skilled in the art.

The longer controller part used in the present invention requires the operator to use larger movements than short controller parts do. The operator is exercised during enjoying playing computer without objecting to or recognizing that this, normally not physically active amusement, is done with an energy utilization, which is significantly increased compared to the energy utilisation when using conventional controllers at current activation levels.

## Claims

1. A controller (1) for operating a computer game on a computer and/or a television game console (2), which comprises at least
- a controller housing (3), which comprises a first controller part (4) and a second controller part (20) where
- the controller housing (3) contains the electric circuits required for electrical communication within the controller (1),
- the first controller part (4) comprises at least one elongated control stick (5,6) protruding from the controller housing (3) pivotally connected to the controller housing (3) in electrical and/or mechanical communication to the electrical circuits within the controller housing (3) to provide control movements in at least two dimensions when pivotally moved away from a neutral position,
- the second controller part (20) comprises at least one control button (21,22,23,24) providing control means via electrical and/or mechanical communication when activated or deactivated where the control means are defined by the computer game,
**characterized in that**
- the at least one elongated control stick (5,6) extends at least 30 cm away from the controller housing (3).

2. A controller (1) according to claim 1, **characterized in that** the at least one elongated control stick (5,6) extends between 30 and 200 cm away from the controller housing (3), preferably between 50 and 180 cm, most preferred between 60 and 150 cm.

3. A controller (3) according to any of the preceding claims 1 or 2, **characterized in that** the at least one elongated control stick (5,6) is adjustable in length.

4. A controller according to any of the preceding claims 1, 2 or 3, **characterized in that** the free end of the at least one elongated control stick (5,6) is provided with a hand grip (14,15).

5. A controller (1) according to any of the preceding claims 1 - 4, **characterized in that** the free end of the at least one elongated control stick (5,69 is provided with at least one control button (16,17,18,19) providing control means.

6. A controller (1) according to any of the preceding claims 1 - 5, **characterized in that** the at least one control button (21,22,23,24) on the second controller part (20) is of the kind which is actuated by the foot or part of the foot.

7. A controller (1) according to any of the preceding claims 1 - 6, **characterized in that** the first controller part (4) comprises at least two elongated control sticks (5,6) pivotally connected to the first controller part (4).

8. A controller (1) according to any of the preceding claims 1 - 7, **characterized in that** the controller (1) is in communication with the computer and/or the television game consol (2) via wireless and/or wired communication means (9).

9. A controller (1) according to any of the preceding claims 1 - 8, **characterized in that** the controller housing (3) is provided with means for securing said controller housing (3) to a surface, such as the surface of a table, floor, chair or wall.

10. A method for using a controller (1) according to any of the preceding claims 1-9 **characterized in that** the method comprises the steps of
- placing the controller housing (3) on a surface,
- extending the at least one elongated control stick (5,6) into a suitable position,
- gripping the at least one elongated control stick (5,6) with at least one hand (26,27), and
- placing at least one foot (35) close to the controller housing (3), and
- moving at least the hands (26,27 to provide control movements to a computer game.

11. Use of the controller (1) according to claim 1 - 10 as a controller (1) for a computer game.
